# EUROPEAN PATENT SPECIFICATION

(11) **EP 4 026 675 B1**
(45) Date of publication and mention of the grant of the patent: **30.10.2024**
(21) Application number: 20859711.2
(22) Date of filing: 04.06.2020
(51) Int. Cl.: B29B 7/58, B29B 9/06, B29C 48/255, B29C 48/30, B29B 7/38, B29C 48/00, B29C 48/04, B29C 48/05, B29C 48/34, B29C 48/40, B29C 48/91

(54) **EXTRUSION DIE AND RELATED EXTRUSION DEVICE FOR EXTRUSION MOLDING**
EXTRUSIONSDÜSE UND DARAUF BEZOGENE EXTRUSIONSVORRICHTUNG ZUM STRANGPRESSEN
MATRICE D'EXTRUSION ET DISPOSITIF D'EXTRUSION ASSOCIÉ POUR MOULAGE PAR EXTRUSION

(30) Priority: 03.09.2019 JP 2019160334
(43) Date of publication of application: 13.07.2022
(73) Proprietor: The Japan Steel Works, Ltd., Tokyo 141-0032 (JP)
(72) Inventor: TAKEUCHI, Takahide, Tokyo 141-0032 (JP); KUBO, Yoshiki, Tokyo 141-0032 (JP)
(74) Representative: Locas, Davide
(86) International application number: PCT/JP2020/022184
(87) International publication number: WO 2021/044684

(56) References cited:
- EP-A1- 4 046 767
- JP-A- 2007 331 285
- JP-A- 2007 331 285
- JP-A- 2013 233 702
- JP-A- 2016 007 819
- JP-A- 2017 196 875
- JP-A- 2017 196 875
- JP-A- H09 225 990
- JP-A- H10 278 093

## Description

### TECHNICAL FIELD

The present invention relates to an extruder and an extrusion die.

### BACKGROUND ART

Japanese Patent Application Laid-open No. 2016-7819 (Patent Document 1) discloses a technique relating to a strand manufacturing apparatus including an extruder and a die. Also, a flow rate regulator for die head is disclosed in JP H10 278093 A.

### RELATED ART DOCUMENTS

### PATENT DOCUMENTS

Patent Document 1: Japanese Patent Application Laid-open No. 2016-7819

### SUMMARY OF THE INVENTION

### PROBLEMS TO BE SOLVED BY THE INVENTION

Resin products, for example, resin pellets can be manufactured by using resins extruded from an extruder. It is desired to improve quality of the resin products manufactured by using the resins extruded from the extruder.

Other problems and novel features will become apparent from descriptions of the present specification and the accompanying drawings.

### MEANS FOR SOLVING THE PROBLEMS

According to the invention, an extrusion die as claimed in independent claim 1 is enclosed, as well as a related extruder including such a die according to claim 7; further preferred embodiments are claimed in the dependent claims.

### EFFECTS OF THE INVENTION

According to the invention, the quality of the resin products manufactured by using the resins extruded from the extruder can be improved.

### BRIEF DESCRIPTION OF THE DRAWINGS

FIG. 1 is explanatory drawing showing a configuration example of a pellet manufacturing system that uses an extruder of one embodiment of the invention;
FIG. 2 is a front view of the extruder of one embodiment of the invention;
FIG. 3 is a plan view showing a plate shown in FIG. 2;
FIG. 4 is sectional view of a main part of the extruder of one embodiment of the invention;
FIG. 5 is a sectional view of a main part of the extruder of one embodiment of the invention;
FIG. 6 is a plan view showing a resin flow path portion and a plurality of hole portions formed in a die of the extruder of one embodiment of the invention;
FIG. 7 is a plan view showing a resin flow path portion and a plurality of hole portions formed in a die of the extruder of one embodiment of the invention;
FIG. 8 is a sectional view of a main part of a die of the extruder of one embodiment of the invention;
FIG. 9 is a sectional view of a main part of a die of the extruder of one embodiment of the invention;
FIG. 10 is a sectional view of a main part of a die of the extruder of one embodiment of the invention;
FIG. 11 is a sectional view of a main part of a die of the extruder of one embodiment of the invention;
FIG. 12 is a plan view showing a resin flow path portion and a plurality of hole portions formed in a die of an extruder of a first study example;
FIG. 13 is a graph showing a flow velocity distribution of a molten resin;
FIG. 14 is a graph showing a flow velocity distribution of a molten resin;
FIG. 15 is a sectional view of a die showing a case of using a plate member of a second study example;
FIG. 16 is a sectional view of a die showing a case of using a plate member of a third study example;
FIG. 17 is a graph showing a flow velocity distribution of a molten resin when a plate member of the third study example is used;
FIG. 18 is a sectional view of a die showing a case of using a plate member of a fourth study example;
FIG. 19 is a graph showing a flow velocity distribution of a molten resin when a plate member of the fourth study example is used;
FIG. 20 is a sectional view of a main part showing a tip portion of the plate member used in the extruder of one embodiment of the invention;
FIG. 21 is a sectional view of a main part showing a tip potion of a plate member of a first modification example according to the invention; and
FIG. 22 is a sectional view of a main part showing a tip portion of a plate member of a second modification example according to the invention.

### DETAILED DESCRIPTION OF PREFERRED EMBODIMENTS

Hereinafter, embodiments will be described in detail with reference to the drawings. Incidentally, in all the drawings for explaining the embodiments, members having the same function are denoted by the same reference numeral, and a repetitive description thereof will be omitted. Further, in the following embodiments, a description of the same or similar part is not repeated in principle except when it is particularly necessary.

### (Embodiment)

### <Configuration Examples of Extruder and Pellet Manufacturing System using It>

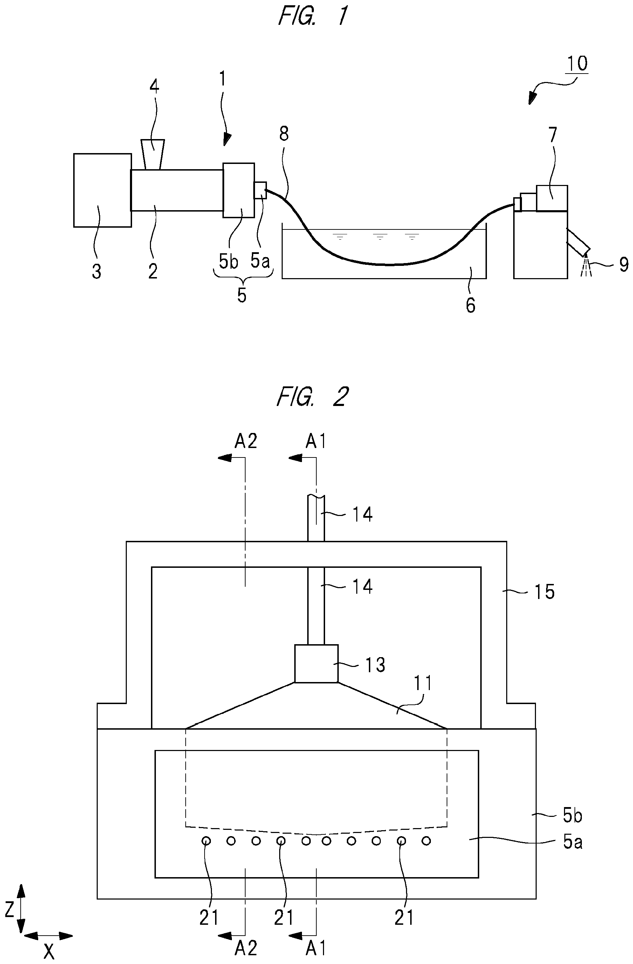

FIG. 1 is an explanatory drawing (side view) showing a configuration example of a pellet manufacturing system (pellet manufacturing device) 10 using an extruder (extrusion molding device) 1 of the present embodiment.

First, a schematic configuration of the extruder 1 will be described with reference to FIG. 1. The extruder 1 shown in FIG. 1 has a cylinder (barrel) 2, two screws (not shown) rotatably arranged in the cylinder 2, a rotary drive mechanism 3 for rotating the screws in the cylinder 2, a hopper (resin input portion) 4 arranged on an upstream side (rear end side) of the cylinder 2, and a die (metal mold) 5 attached to a downstream-side tip of the cylinder 2. The hopper 4 is connected to an upper surface of the cylinder 2 so that a resin can be supplied into the cylinder 2 via the hopper 4. Temperature of the cylinder 2 is controlled by a not-shown temperature adjusting means (temperature adjusting mechanism) such as a heater. The extruder 1 may also have a filler supply device (not shown) connected to the cylinder 2 and, in this case, a desired filler(s) can be supplied into the cylinder 2 from the filler supply device.

Incidentally, when the extruder 1 is referred to as "downstream side" and "upstream side", the "downstream side" means a downstream side of a resin flow in the extruder 1 and the "upstream side" means an upstream side of the resin flow in the extruder 1. Consequently, in the extruder 1, a side of the die 5 near a plurality of hole portions 21 described later is a downstream side, and a side of the die 5 far from the plurality of hole portions 21, that is, a side close to the hopper 4 is an upstream side.

The two screws (not shown) are rotatably inserted and built into the cylinder 2. Consequently, the extruder 1 can also be regarded as a twin-screw extruder (two-screw extrusion device). In the cylinder 2, the two screws are arranged and rotate so as to mesh with each other. A longitudinal direction of the cylinder 2 (long-side direction, axial direction, extending direction) and a longitudinal direction of the screw in the cylinder 2 (long-side direction, axial direction, extending direction) are the same.

The die 5 can function to form a molten resin extruded from the cylinder 2 of the extruder 1 into a predetermined cross-sectional shape (here, a string shape) and discharge the molten resin. Consequently, the die 5 is an extrusion die (metal mold).

The pellet manufacturing system 10 shown in FIG. 1 further includes a cooling tank 6 and a cutting device 7 in addition to the extruder 1.

Next, an outline of an operation of the pellet manufacturing system 10 including the extruder 1 shown in FIG. 1 will be described.

In the extruder 1, the resin (thermoplastic resin) supplied from the hopper 4 into the cylinder 2 is melted (that is, becomes a molten resin) while being sent forward by rotation of the screws in the cylinder 2. When the filler is supplied into the cylinder 2 from the filler supply device (not shown), the resin (molten resin) and the filler are kneaded in the cylinder 2 of the extruder 1 by the rotation of the screws, so that the molten resin in the cylinder 2 becomes a state of containing the filler.

In the extruder 1, the molten resin sent forward in the cylinder 2 by the rotation of the screws is extruded from the die 5 attached to a tip of the cylinder 2. At this time, the molten resin is formed into a string shape by the die 5 and is extruded as a strand (resin strand) 8 from the die 5. The strand 8 extruded from the die 5 of the extruder 1 is cooled in the cooling tank 6 and is solidified (coagulated). The solidified strand 8 is cut to a predetermined length by the cutting device 7. Thus, pellets (resin pellets) 9 are produced. In the pellet manufacturing system 10, the extruder 1 can function as a strand manufacturing device.

### <Die Configuration>

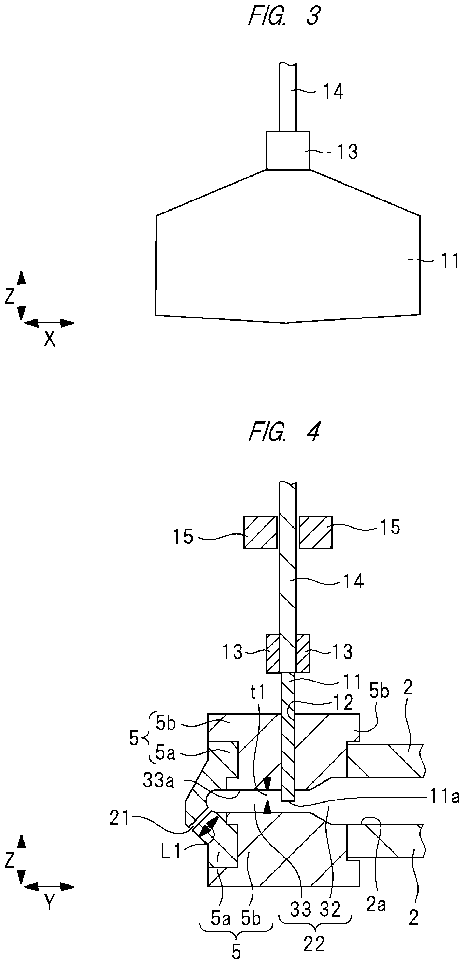

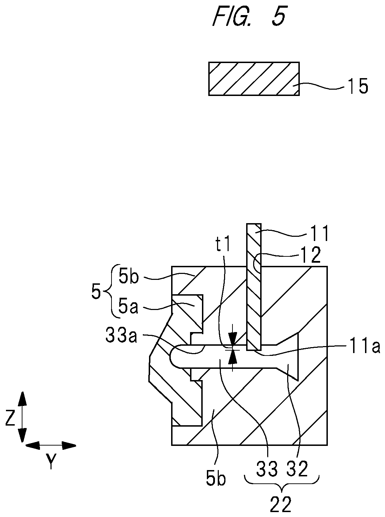

Next, a configuration of the die (metal mold) 5 used in the extruder 1 of the present embodiment will be described with reference to FIGS. 2 to 5. FIG. 2 is a front view of the extruder 1 of the present embodiment, and a front view of the die 5 attached to the tip of the cylinder 2 a is illustrated. FIG. 3 is a plan view showing a plate member 11 shown in FIG. 2. FIGS.4 and 5 each are a sectional view of a main part of the extruder 1 of the present embodiment. FIG. 4 substantially corresponds to a sectional view taken at a position of line A1-A1 shown in FIG. 2, and FIG. 5 substantially corresponds to a sectional view taken at a position of line A2-A2 shown in FIG. 2. Further, in FIGS. 2, 4 and 5, for simplification, a fixing member (screw or the like) for fixing a die member 5a to a die member 5b is omitted in figure.

Incidentally, an X direction, a Y direction, and a Z direction are shown in FIGS. 2 to 5, FIGS. 6 to 11 described later, and the like. The X, Y, and Z directions are directions intersecting with one another and, more specifically, are directions orthogonal to one another. Consequently, the X direction and the Y direction are orthogonal to each other, and the Z direction is orthogonal to the X direction and the Y direction. The Y direction is a direction in which the molten resin mainly flows in a resin flow path portion 22 (more specifically, slit portion 33). The Z direction is a thickness direction of the resin flow path portion 22 (more specifically, slit portion 33). The X and Y directions correspond to a horizontal direction, and the Z direction corresponds to an up-and-down direction (vertical direction, height direction).

The die 5 has a plurality of hole portions (die hole portions, discharge ports, nozzle portions) 21 for discharging the strand 8 made of a molten resin, and a resin flow path portion 22 which guides, into the plurality of hole portions 21, the molten resin supplied (introduced) from the cylinder 2. That is, the resin flow path portion 22 and the plurality of hole portions 21 are formed in the die 5. The resin flow path portion 22 extends in a flow path direction (here, Y direction) that leads to the plurality of hole portions 21 from an inflow port 31. In the die 5, the plurality of hole portions 21 are arranged in the X direction and are separated from each other. FIG. 2 shows a case where an arrangement of the plurality of hole portions 21 is in a row, but as another form, the arrangement of the plurality of hole portions 21 may be a staggered arrangement.

The plurality of hole portions (die hole portions) 21 communicate with (spatially connect with) the common resin flow path portion 22. The resin flow path portion 22 and the plurality of hole portions 21 are spaces in which the molten resin supplied (introduced) to the die 5 can flow (move). The resin flow path portion 22 and the plurality of hole portions 21 can also be regarded as a flow path (resin flow path) that is formed in the die 5 and which the molten resin passes through. A periphery of a resin flow path composed of the resin flow path portion 22 and the plurality of hole portions 21 is surrounded by metal materials constituting the die 5.

The plurality of hole portions 21 function to form, into a predetermined shape, a cross-sectional shape of the molten resin (strand 8) extruded from the die 5. That is, since the molten resin passes through the plurality of hole portions 21 and is discharged to an outside of the die 5, the molten resin is formed into a predetermined cross-sectional shape by the hole portions 21 and is discharged from the hole portions 21 to the outside of the die 5. For example, when the cross-sectional shape (cross-sectional shape substantially perpendicular to the extending direction of the hole portion 21) of the hole portion 21 is circular, the cross-sectional shape (cross-sectional shape substantially perpendicular to the extending direction of the strand 8) of the molten resin (strand 8) discharged from the hole portion 21 (strand 8) also becomes circular. Further, a diameter of the strand 8 can be controlled by a diameter of the hole portion 21. However, the diameter of the strand 8 also changes depending on a flow velocity of the molten resin discharged from the hole portions 21. The resin flow path portion 22 functions as a flow path (resin flow path) for guiding, into the plurality of hole portions 21, the molten resin supplied from the cylinder 2 to the die 5.

The die 5 is configured by a die member (die body portion) 5a and a die member (die holder portion) 5b. That is, the die 5 has the die member 5a and the die member 5b, and the die member 5b is attached to a tip (downstream-side tip) of the cylinder 2 of the extruder 1, and the die member 5a is attached to a front side (a side opposite to a side connected to the cylinder 2) of the die member 5b. Consequently, the die member 5a is held by the cylinder 2 via the die member 5b, and the die member 5b has a function of holding the die member 5a. The plurality of hole portions 21 are formed in the die member 5a, and the resin flow path portion 22 is mainly formed in the die member 5b. Thus, the die member 5b holds the die member 5a in which the plurality of hole portions 21 are formed, and also has a function of defining the resin flow path portion 22 for guiding, into the plurality of hole portions 21, the molten resin from the cylinder 2.

The die 5 may be formed of one integral member, but if the die 5 is formed of a plurality of members (here, die members 5a, 5b), the plurality of hole portions 21 and the resin flow path portion 22 can easily be formed, which makes a processing of the die 5 easy. Since the definition of the cross-sectional shape of the strand 8 is made by the hole portions 21 formed in the die member 5a, the die member 5a can be regarded as a die and the die member 5b can be regarded as a die holder portion for holding the die (die member 5a). Further, the die member 5b can be configured by a plurality of members (metal members, metal mold members) and, in that case, the die member 5b can be configured by fixing the plurality of members with fixing members such as screws or bolts.

The die 5 is preferably made of a metal material (s) and, therefore, the die members 5a, 5b are preferably made of metal materials. The die member 5b is fixed to the cylinder 2 by a fixing member (not shown) such as a screw or a bolt. Further, the die member 5a is fixed to the die member 5b by a fixing member (not shown) such as a screw or a bolt.

The die member 5b is attached to the cylinder 2 so that an opening (outlet of the molten resin) 2a at the tip of the cylinder 2 communicates with (spatially connects with) the resin flow path portion 22 of the die 5. Consequently, the molten resin extruded from the opening 2a at the tip of the cylinder 2 is supplied to the resin flow path portion 22, flows into the plurality of hole portions 21 via the resin flow path portion 22, and is discharged from the plurality of hole portions 21 to the outside of the die 5. The molten resin discharged from the plurality of hole portions 21 becomes the above-mentioned strand 8. A longitudinal direction (long-side direction, axial direction, extending direction) of the cylinder 2 can be made the Y direction.

Formed in the die member 5b is a groove portion (passage portion, slide portion) 12 that allows the plate member (moving plate, plate portion, slide plate portion, gate portion) 11 to move in an up-and-down direction. The plate member 11 is arranged (accommodated and inserted) in the groove portion 12 of the die member 5b. The plate member 11 is inserted into the groove portion 12 of the die member 5b, but can move in the up-and-down direction. That is, the plate member 11 is inserted into the groove portion 12 of the die member 5b in a state of being movable in the up-and-down direction (that is, in a manner of being movable in the up-and-down direction), and the plate member 11 is configured to be capable of changing its height position to a desired height position. The plate member 11 is a plate-shaped member. Like the die members 5a, 5b, the plate member 11 is also preferably made of a metal material(s).

The plate member (moving plate) 11 is movable in the up-and-down direction (Z direction) so as to protrude toward the resin flow path portion 22. The plate member 11 is arranged along the X direction. Both end portions of the plate member 11 in the X direction move in the up-and-down direction (Z direction) so as to contact with an inner wall of the resin flow path portion 22.

A part of the plate member 11 protrudes toward the resin flow path portion 22. Specifically, a tip portion (lower end portion) of the plate member 11 projects into the resin flow path portion 22 from above the resin flow path portion 22. Consequently, by moving the plate member 11 in the up-and-down direction (Z direction) and adjusting the height position of the plate member 11, a protrusion amount (t1) of the plate member 11 in the resin flow path portion 22 can be changed (controlled). That is, when the plate member 11 is moved downward to lower the height position of the plate member 11, the protrusion amount (t1) of the plate member 11 in the resin flow path portion 22 is increased, and when the plate member 11 is moved upward to increase the height position of the plate member 11, the protrusion amount (t1) of the plate member 11 in the resin flow path portion 22 is decreased. Although its details will be described later, a flow velocity distribution of the molten resin flowing through the resin flow path portion 22 can be controlled by adjusting the protrusion amount (t1) of the plate member 11 in the resin flow path portion 22. The plate member 11 can also be regarded as a component of the die 5 and, in this case, the die 5 is configured by the die members 5a, 5b and the plate member 11.

The plate member 11 is coupled to a slide bar 14 by the fixing portion 13. The slide bar 14 is a rod-shaped member, preferably made of a metal material. A support member 15 is attached to the die member 5b, and the slide bar 14 passes through an opening of the support member 15. Consequently, a moving direction of the slide bar 14 can be defined as an up-and-down direction. The slide bar 14 is movable in the up-and-down down, and moving the slide bar 14 in the up-and-down direction makes it possible to move in the up-and-down direction the plate member 11 inserted in the groove portion 12 of the die member 5b. Any mechanism can be used as a mechanism for moving the slide bar 14 in the up-and-down direction. For example, the slide bar 14 can be moved in the up-and-down direction by a hydraulic cylinder or the like. Alternatively, the slide bar 14 can be moved in the up-and-down direction by rotating a screw member coupled to the slide bar 14.

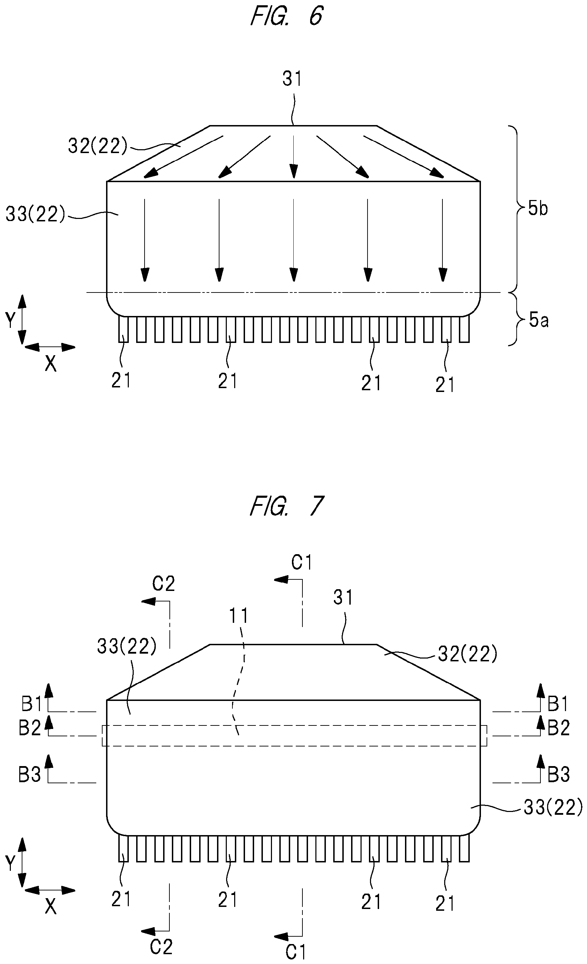

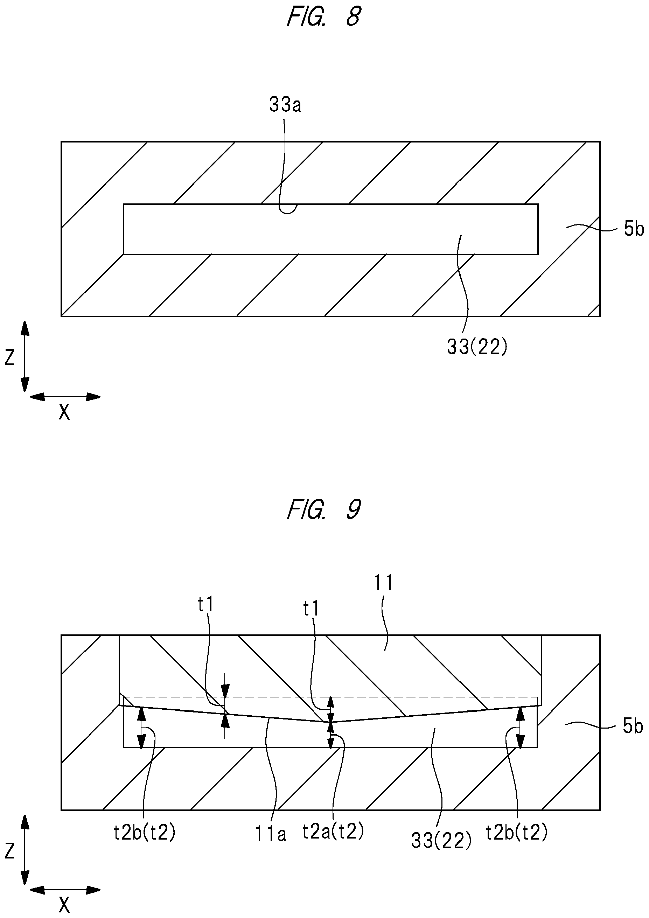

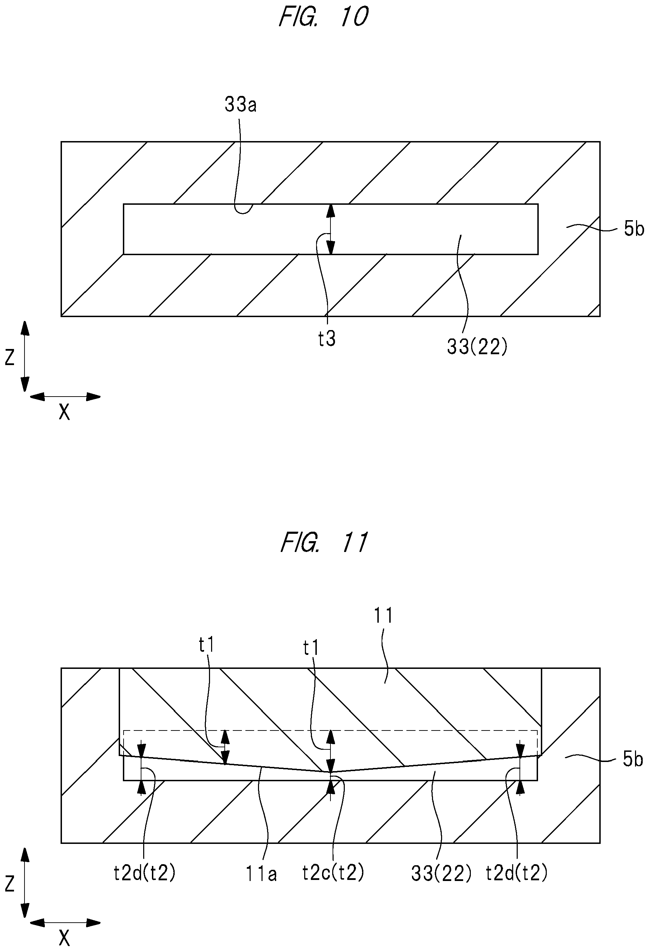

Next, a detailed configuration of the resin flow path portion 22 will be described with reference to FIGS. 6 to 10. FIGS. 6 and 7 are plan views each showing the resin flow path portion 22 and the plurality of hole portions 21 formed in the die 5. Each of FIGS. 8 to 10 is a sectional view of a main part of the die 5. In FIG. 6, the flow of the molten resin in the resin flow path portion 22 is schematically shown by arrows. Further, in FIG. 7, a position of the plate member 11 protruding toward the resin flow path portion 22 is shown by a dotted line. A portion indicated by reference numeral 5a out of the resin flow path portion 22 and the plurality of hole portions 21 shown in FIG. 6 corresponds to a portion formed in the die member 5a, and a portion indicated by reference numeral 5b corresponds to a portion formed in the die member 5b. FIG. 8 substantially corresponds to a sectional view taken at a position of line B1-B1 shown in FIG. 7, FIG. 9 substantially corresponds to a sectional view taken at a position of line B2-B2 shown in FIG. 7, and FIG. 10 substantially corresponds to a sectional view taken at a position of line B3-B3 shown in FIG. 7. Incidentally, FIG. 4 corresponds to the sectional view taken at the position of line A1-A1 in FIG. 2, but also corresponds to the sectional view taken at the position of line C1-C1 in FIG. 7. Further, although FIG. 5 corresponds to the sectional view taken at the position of line A2-A2 in FIG. 2, but also corresponds to the sectional view taken at the position of line C2-C2 in FIG. 7. Furthermore, since FIG. 2 is a schematic view, the number of hole portions 21 in FIG. 2 does not match with the number of hole portions 21 in each of FIGS. 7 and 8, but actually match with it. The number of hole portions 21 formed in the die 5 can be, for example, about 3 to 100.

The resin flow path portion 22 has an inflow port (opening) 31 in which the molten resin from the cylinder 2 flows, a resin introduction portion 32 coupled to the inflow port 31, and a slit portion 33 located on a downstream side of the resin introduction portion 32 and coupled to the resin introduction portion 32. The plurality of hole portions 21 are coupled with a downstream-side end portion of the slit portion 33. A diameter of each hole portion 21 is considerably smaller than a width (dimension in the X direction) of the slit portion 33. Further, a diameter of each hole portion 21 is smaller than a thickness (dimension in the Z direction) of the slit portion 33.

A shape of the inflow port 31 is, for example, rectangular, circular, elliptical or oval. A width of the inflow port 31 corresponds to dimension of the inflow port 31 in the X direction. The inflow port 31 is an opening formed by the resin introduction portion 32 reaching a surface (a surface on a side connected to the cylinder 2) of the die member 5b. That is, an upstream-side end face of the resin introduction portion 32 is the inflow port 31.

The slit portion 33 has a slit-like (plate-like) shape having a plane (main surface) substantially parallel to the X direction and the Y direction. A planar shape of the slit portion 33 is substantially rectangular. Each side of a rectangle forming the planar shape of the slit portion 33 is parallel to either the X direction or the Y direction. In cases of FIGS. 6 and 7, a long side of the slit portion 33 is substantially parallel to the X direction, a short side of the slit portion 33 is substantially parallel to the Y direction, and a thickness direction of the slit portion 33 is the Z direction. The thickness (dimension in the Z direction) of the slit portion 33 is smaller than the width (dimension in the X direction) of the slit portion 33 and smaller than a length (dimension in the Y direction) of the slit portion 33.

The width (dimension in the X direction) of the slit portion 33 is substantially constant (uniform), and the length (dimension in the Y direction) of the slit portion 33 is substantially constant (uniform). Further, although the thickness (dimension in the Z direction) of the slit portion 33 is substantially constant (uniform), a part of the plate member 11 projects from the slit portion 33. Consequently, in the slit portion 33, a region where the plate member 11 protrudes becomes smaller only the protrusion amount (protrusion distance) t1 of the plate member 11 in an effective thickness of the slit portion 33 as compared with a region other than the region where the plate member 11 protrudes. The thickness (dimension in the Y direction) of the plate member 11 is smaller than the length (dimension in the Y direction) of the slit portion 33.

Here, the protrusion amount t1 of the plate member 11 corresponds to a protrusion amount (protrusion distance) of the plate member 11 with respect to the slit portion 33, and is shown in FIGS. 4, 5, 9 and 11 described later. A difference (distance in the Z direction) in height position between an upper surface 33a (upper surface of the slit portion 33 of the slit portion 33 that does not overlap with the plate member 11 in a plan view) and a tip surface 11a of the plate member 11 corresponds to the protrusion amount t1 of the plate member 11.

A width (dimension in the X direction) of an upstream-side end surface of the resin introduction portion 32 coincides with a width (dimension in the X direction) of the inflow port 31. Further, a width (dimension in the X direction) of a downstream-side end portion of the resin introduction portion 32 coincides with a width (dimension in the X direction) of an upstream-side end portion of the slit portion 33. The width (dimension in the X direction) of the slit portion 33 is larger than the width (dimension in the X direction) of the inflow port 31. Consequently, in the resin introduction portion 32, the width (dimension in the X direction) of the resin introduction portion 32 gradually increases from an upstream side toward a downstream side. Therefore, the planar shape of the resin introduction portion 32 is substantially trapezoidal. Furthermore, the thickness (dimension in the Z direction) of the resin introduction portion 32 gradually decreases from the upstream side toward the downstream side. The molten resin extruded from the cylinder 2 flows from the inflow port 31 of the die member 5b, passes through the resin introduction portion 32 and the slit portion 33 in order, flows into the plurality of hole portions 21, and is discharged as the strand 8 from the plurality of hole portions 21 to the outside of the die 5.

The resin introduction portion 32 and the slit portion 33 are adjacent to each other in the Y direction and, therefore, the resin introduction portion 32 communicates with (spatially connects with) the slit portion 33. Consequently, the downstream-side end portion of the resin introduction portion 32 and the upstream-side end portion of the slit portion 33 are adjacent to each other in the Y direction, and form a boundary between the resin introduction portion 32 and the slit portion 33. Therefore, the width (dimension in the X direction) of the slit portion 33 is the same as a width (dimension in the X direction) at the downstream-side end portion of the resin introduction portion 32, and the thickness (dimension in the Z direction) of the slit portion 33 is the same as a thickness (dimension in the Z direction) at the downstream-side end portion of the resin introduction portion 32. The plurality of hole portions 21 are adjacent to the slit portion 33 in the Y direction and, therefore, the slit portion 33 communicates with (spatially connects with) the plurality of hole portions 21. Further, at the boundary between the resin introduction portion 32 and the slit portion 33, the thickness (dimension in the Z direction) of the resin introduction portion 32 and the thickness (dimension in the Z direction) of the slit portion 33 coincide with each other, but except for the boundary between the resin introduction portion 32 and the slit portion 33, the thickness (dimension in the Z direction) of the slit portion 33 is thinner (smaller) than the thickness (dimension in the Z direction) of the resin introduction portion 32.

The plate member 11 is arranged at a position overlapping with the slit portion 33 in a plan view. Incidentally, the plan view corresponds to a case of being viewed in a plane parallel to the X direction and the Y direction.

The plate member 11 is a plate-shaped member having a plane substantially parallel to the X and Z directions, and the thickness (dimension in the Y direction) of the plate member 11 is smaller than the length (dimension in the Y direction) of the slit portion 33. Incidentally, a thickness direction of the plate member 11 is the Y direction. In a plan view, the plate member 11 is arranged on a downstream side of the upstream-side end portion (that is, the boundary between the resin introduction portion 32 and the slit portion 33) of the slit portion 33 and on an upstream side of the downstream-side end portion of the slit portion 33. That is, in a plan view, the plate member 11 is arranged in an intermediate region (region away from both end portions) of the slit portion 33 in the Y direction. Namely, the plate member 11 protrudes in the middle (in the middle in the Y direction) of the slit portion 3. Incidentally, since the plate member 11 is inserted into the groove portion 12, a position of the groove portion 12 coincides with the position of the plate member 11 in a plan view.

The protrusion amount t1 of the plate member 11 with respect to the slit portion 33 is not uniform in a width direction (X direction). Specifically, the protrusion amount t1 of the plate member 11 with respect to the slit portion 33 is the largest at a center of the slit portion 33 in the width direction (X direction), and gradually becomes smaller toward both ends from the center of the slit portion 33 in the width direction (X direction). Consequently, in the width direction (X direction) of the slit portion 33, the protrusion amount t1 of the plate member 11 at the center of the slit portion 33 is larger than the protrusion amount t1 of the plate member 11 at the both ends of the slit portion 33.

The plate member 11 is movable in the up-and-down direction (Z direction) so as to project from the slit portion 33, but both end portions of the plate member 11 in the X direction move in the up-and-down direction (Z direction) so as to contact with an inner wall of the slit portion 33. That is, the both end portions of the plate member 11 in the X direction do not move in the up-and-down direction (Z direction) in a state of being separated from the inner wall (inside wall) of the slit portion 33, but moves in the up-and-down direction (Z direction) so as to contact with the inner wall (inside wall) of the slit portion 33. Consequently, the width (dimension in the X direction) of the plate member 11 is the same as the width (dimension in the X direction) of the slit portion 33 or is larger than the width (dimension in the X direction) of the slit portion 33. Thus, the plate member 11 does not protrude only from a part of the width of the slit portion 33, but protrudes over the entire width of the slit portion 33. That is, the plate member 11 protrudes not only in the vicinity of a central portion in the width direction (X direction) of the slit portion 33 but also in the vicinity of the both end portions in the width direction (X direction) of the slit portion 33. Therefore, the plate member 11 is in a state of protruding over the entire width of the slit portion 33 in the middle (in the middle in the Y direction) of the slit portion 33. For this reason, in the cross section shown in FIG. 9 and FIG. 11 described later, t1 > 0 is met from the center toward the both ends in the width direction (X direction) of the slit portion 33. That is, in the cross section shown in FIG. 9 and FIG. 11 described later, t1 > 0 is met not only at the center of the slit portion 33 in the width direction (X direction) but also at the both ends.

Further, the extending direction of each of the plurality of hole portions 21 provided in the die member 5a is inclined downward from the Y direction. That is, each hole portion 21 extends diagonally downward. Consequently, the molten resin is discharged diagonally downward from the plurality of hole portions 21, so that the strand 8 can be easily guided to the cooling tank 6.

Further, in the present embodiment, a length (dimension of the hole portion 21 in the extending direction, nozzle length) L1 of each of the plurality of hole portions 21 provided in the die member 5a is greater than a thickness (dimension in the Z direction) t3 of the slit portion 33 (i.e., L1 > t3). Incidentally, the length L1 is shown in FIG. 4, and the thickness t3 is shown in FIG. 10. The length L1 of each hole portion 21 may be set to the thickness t3 or less (L1 ≤ t3) of the slit portion 33, but uniformity of the flow velocity distribution of the molten resin discharged from the plurality of hole portions 21 is easily increased when pressure of the molten resin at the tip of the hole portion 21 is high to some extent. From this viewpoint, the length L1 of each hole portion 21 is preferably lengthened to some extent and, in the present embodiment, it is more preferable that the length L1 is larger than the thickness t3 of the slit portion 33 (L1 > t3).

Further, in the extruder 1 of the present embodiment, the plate member 11 inserted in the groove portion 12 of the die member 5b is movable in the up-and-down direction. FIG. 11 is a sectional view of a main part of the die 5, and substantially corresponds to the sectional view taken at the position of line B2-B2 shown in FIG. 7 similarly to FIG. 9 described above. However, FIG. 11 corresponds to a case where the plate member 11 is moved downward to lower the height position of the plate member 11 as compared with the case of FIG. 9. Consequently, the protrusion amount t1 of the plate member 11 with respect to the slit portion 33 is larger in the case of FIG. 11 than in the case of FIG. 9.

Although its details will be described later, the flow velocity distribution of the molten resin that flows through the resin flow path portion 22 can be controlled by adjusting the protrusion amount t1 of the plate member 11 in the resin flow path portion 22. For example, when viscosity of the molten resin is low, as shown in FIG. 9, the height position of the plate member 11 is increased to reduce the protrusion amount t1 of the plate member 11 in the resin flow path portion 22. Meanwhile, when the viscosity of the molten resin is high, as shown in FIG. 11, the height position of the plate member 11 is lowered to increase the protrusion amount t1 of the plate member 11 in the resin flow path portion 22. Consequently, the flow velocity of the molten resin discharged from the plurality of hole portions 21 can be made uniform in both the case where the viscosity of the molten resin is low and the case where the viscosity of the molten resin is high.

### <Background of Study>

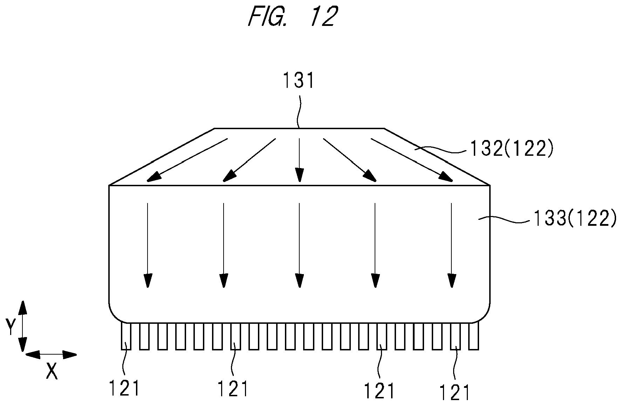

FIG. 12 is a plan view showing a resin flow path portion 122 and a plurality of hole portions 121 formed in a die of an extruder of a first study example that has been examined by the present inventor(s), and shows a region corresponding to each of FIGS. 6 and 7. The resin flow path portion 122 shown in FIG. 12 corresponds to the above-mentioned resin flow path portion 22, and the hole portions 121 shown in FIG. 12 correspond to the above-mentioned hole portions 21. The resin flow path portion 122 is configured by a resin introduction portion 132 corresponding to the above-mentioned resin introduction portion 32 and a slit portion 133 corresponding to the above-mentioned slit portion 33.

The first study example is different from the present embodiment in that it has no member corresponding to the plate member 11. Consequently, in the first study example, a member corresponding to the above-mentioned groove portion 12 is not formed in the die.

Also in a case of the first study example, the molten resin extruded from the above-mentioned cylinder 2 flows from an inflow port 131 of the die member, passes through the resin introduction portion 132 and the slit portion 133 in order, flows into the plurality of hole portions 121, and is discharged as a strand from the plurality of hole portions 121 to the outside of the die.

In FIG. 12, a flow of the molten resin in the resin flow path portion 122 is schematically shown by arrows. As can be seen from FIG. 12, the molten resin that has flowed from the cylinder 2 into the inflow port 131 of the die member flows in the Y direction while spreading in the X direction (on both end portion sides in the X direction) in the resin introduction portion 132. That is, the resin introduction portion 132 has a flow that spreads in the X direction and a flow that moves in the Y direction. Further, in the slit portion 133, the molten resin flows in the substantially Y direction. Consequently, in the slit portion 133, flow path resistance is larger in the vicinity of both end portions in the X direction than in the vicinity of the center in the X direction. Therefore, in the slit portion 133, the flow velocity of the molten resin is smaller in the vicinity of the both end portions in the X direction than in the vicinity of the center in the X direction, which may make the flow velocity distribution of the molten resin (strand) discharged from the plurality of hole portions 121 non-uniform. Specifically, among the plurality of hole portions 121 arranged in the X direction, the flow velocity of the molten resin (strand) discharged from the hole portions 121 in the vicinity of the both end portions in the X direction becomes smaller than the flow velocity of the molten resin discharged from the hole portions 121 in the vicinity of the center in the X direction. This may bring a decrease in quality of a resin product (here, resin pellet) which is manufactured by using the molten resin extruded from the die, so that improvement of such a situation is desired.

### <Main Features and Effects>

The die 5 attached to the cylinder 2 of the extruder 1 is an extrusion die. The die 5 includes an inflow port 31 which is an opening for supplying a molten resin, a plurality of hole portions (die hole portions) 21 for discharging a strand (s) made of the molten resin, and a resin flow path portion 22 extending in a flow path direction (here, the Y direction) leading to the plurality of hole portions 21 from the inflow port 31.

One of main features of the present embodiment is that a plate member (moving plate) 11 movable in the up-and-down direction (Z direction) so as to project toward the resin flow path portion 22 (more specifically, the slit portion 33) is provided on the die 5. The plate member 11 is arranged along a direction (here, X direction) orthogonal to each of the flow path direction (Y direction), which leads to the plurality of hole portions 21 from the inflow port 31 and the vertical direction (Z direction). Both end portions of the plate member 11 in the X direction move in the up-and-down direction (Z direction) so as to contact with an inner wall of the resin flow path portion 22 (more specifically, the slit portion 33). A protrusion amount t1 of the plate member 11 with respect to the resin flow path portion 22 (more specifically, the slit portion 33) becomes small from a central portion (central portion of the plate member 11 in the X direction) in the X direction toward the both end portions (both end portions of the plate member in the X direction).

Incidentally, the both end portions of the plate member 11 in the X direction move in the up-and-down direction (Z direction) so as to contact with the inner wall of the resin flow path portion 22 (more specifically, the slit portion 33), so that to reflect such movement, the plate member 11 protrudes over the entire width of the resin flow path portion 22 (more specifically, the slit portion 33) in the middle of the resin flow path portion 22 (more specifically, the slit portion 33).

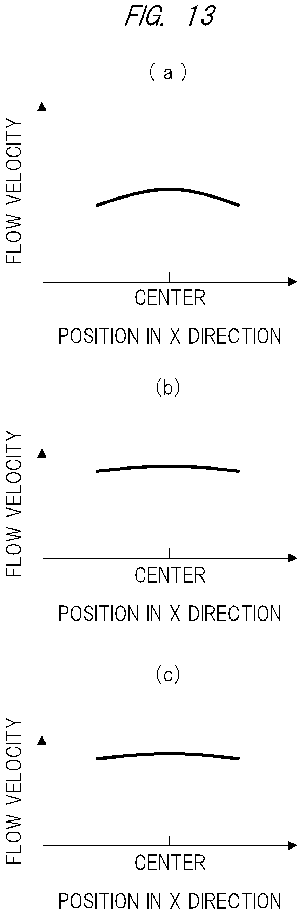

FIG. 13 is a graph showing a flow velocity distribution of the molten resin. (a) of FIG. 13 shows a flow velocity distribution of the molten resin flowing through the slit portion 33 at the position of line B1-B1 in FIG. 7, (b) of FIG. 13 shows a flow velocity distribution of the molten resin flowing through the slit portion 33 at the position of line B3-B3 in FIG. 7, and (c) of FIG. 13 shows a flow velocity distribution of the molten resin immediately after being discharged from the plurality of hole portions 21. In the graphs of (a), (b), and (c) of FIG. 13, a vertical axis corresponds to a flow velocity of the molten resin and is shown in an arbitrary unit. Further, in the graphs of (a), (b), and (c) of FIG. 13, a horizontal axis corresponds to a position in the X direction. In (a) and (b) of FIG. 13, a center of the horizontal axis corresponds to the center of the slit portion 33 in the X direction, and both end portions of the horizontal axis correspond to the both end portions of the slit portion 33 in the X direction. Meanwhile, in (c) of FIG. 13, a center of the horizontal axis corresponds to a flow velocity of the molten resin discharged from the central hole portion 21 among the plurality of hole portions 21 arranged in the X direction, and both end portions in the horizontal axis correspond to a flow velocity of the molten resin discharged from the hole portions 21 at the both end portions among the plurality of hole portions 21 arranged in the X direction.

The molten resin extruded from the cylinder 2 of the extruder 1 flows from the inflow port 31 of the die 5, passes through the resin flow path portion 22 (more specifically, passing through the resin introduction portion 32 and the slit portion 33 in order), flows into the plurality of hole portions 21, and is discharged from the plurality of hole portions 21 to the outside of the die 5. In FIG. 6 mentioned above, the flow of the molten resin in the resin flow path portion 22 is schematically shown by arrows. As can be seen from FIG. 6, the molten resin flowing from the cylinder 2 to the inflow port 31 of the die 5 flows in the Y direction while spreading in the X direction (on both end portion sides in the X direction) in the resin introduction portion 32. That is, the resin introduction portion 32 has is a flow that spreads in the X direction and a flow that moves in the Y direction. Further, in the slit portion 33, the molten resin substantially flows in the Y direction. Consequently, the flow path resistance leading to the slit portion 33 from the inflow port 31 is larger in the vicinity of the both end portions of the slit portion 33 in the X direction than in the vicinity of the center of the slit portion 33 in the X direction. Therefore, as shown in (a) of FIG. 13, the flow velocity of the molten resin immediately after flowing from the resin introduction portion 32 into the slit portion 33 tends to become smaller in the vicinity of the both end portions in the X direction than in the vicinity of the center in the X direction. Consequently, the flow velocity distribution when the molten resin flows from the resin introduction portion 32 into the slit portion 33 becomes larger at the center in the width direction (here, the X direction) of the slit portion 33 as shown in (a) of FIG. 13, and may have such a distribution as to gradually decreases from the center toward the both ends in the width direction (here, the X direction) of the slit portion 33.

In the present embodiment, the plate member 11 projects over the entire width of the slit portion 33 in the middle of the slit portion 33. A protruding portion of the plate member 11 with respect to the slit portion 33 acts to suppress the flow of the molten resin in the slit portion 33. That is, in the slit portion 33, the effective thickness of the slit portion 33 becomes smaller only the protrusion amount t1 of the plate member 11 in a region where the plate member 11 protrudes than in a region other than the region where the plate member 11 protrudes, so that the molten resin does not easily flow in the region where the plate member 11 protrudes. Then, in the present embodiment, the protrusion amount t1 of the plate member 11 with respect to the slit portion 33 becomes large at the center in the width direction (here, the X direction) of the slit portion 33, and gradually becomes smaller from the center toward the both ends of the slit portion 33 in the width direction (here, the X direction). The protruding portion of the plate member 11 with respect to the slit portion 33 acts to suppress (inhibit) the flow (flow velocity) of the molten resin in the slit portion 33, but the action increases as the protrusion amount t1 of the plate member 11 increases and decreases as the protrusion amount t1 of the plate member 11 decreases. Consequently, the protrusion amount t1 of the plate member 11 with respect to the slit portion 33 is large in the vicinity of the center of the slit portion 33 in the width direction (X direction), so that to reflect such a situation, the action in which the flow (flow velocity) of the molten resin is suppressed by the plate member 11 is the greatest. Then, the protrusion amount t1 of the plate member 11 gradually decreases from the center of the slit portion 33 in the width direction (X direction) toward the both end sides, so that to reflect such a situation, the action in which the flow (flow velocity) of the molten resin is suppressed by the plate member 11 gradually decreases (becomes small), too. That is, in the slit portion 33, considering the flow path resistance when the molten resin passes below the protruding portion of the plate member 11, the flow path resistance is the largest in the vicinity of the center of the slit portion 33 in the width direction (X direction), and the flow path resistance gradually decreases from the center of the slit portion 33 in the width direction (X direction) toward the both end sides.

Consequently, the protruding portion of the plate member 11 with respect to the slit portion 33 can act to alleviate (improve) the non-uniformity of the flow velocity distribution of the molten resin as shown in (a) of FIG. 13. That is, the protruding portion of the plate member 11 with respect to the slit portion 33 can act to make the flow velocity distribution of the molten resin uniform. For this reason, after the molten resin passes below the protruding portion of the plate member 11, the flow velocity distribution of the molten resin becomes a distribution as shown in (b) of FIG. 13, and becomes almost uniform regardless of the position in the X direction. This makes it possible to make the flow velocity when the molten resin flows from the slit portion 33 into the plurality of hole portions 21 substantially uniform regardless of the position in the X direction. Therefore, the plurality of hole portions 21 mutually have substantially the same flow velocity. Consequently, as shown in (c) of FIG. 13, the flow velocity distribution of the molten resin (strand 8) discharged from the plurality of hole portions 21 can be made uniform. Specifically, in the plurality of hole portions 21 arranged in the X direction, the respective flow velocities of the molten resin discharged from the respective hole portions 21 can be made substantially the same. This makes it possible to improve the quality of the resin product (here, pellet 9) manufactured by using the resin extruded from the die 5. In addition, dimensional uniformity of the manufactured pellets 9 can be improved. Further, the resin product (here, pellet 9) can be more accurately manufactured by using the resin extruded from the die 5. Furthermore, substantially the same flow velocity makes it easier to manage a manufacturing process.

Further, if a type and a ratio of the resin material and the filler to be kneaded in the cylinder 2 of the extruder 1 are changed, the viscosity of the molten resin supplied from the cylinder 2 to the resin flow path portion 22 of the die 5 can be changed. Furthermore, the viscosity of the molten resin supplied from the cylinder 2 to the resin flow path portion 22 of the die 5 can be changed by changing conditions and the like for kneading the resin in the cylinder 2.

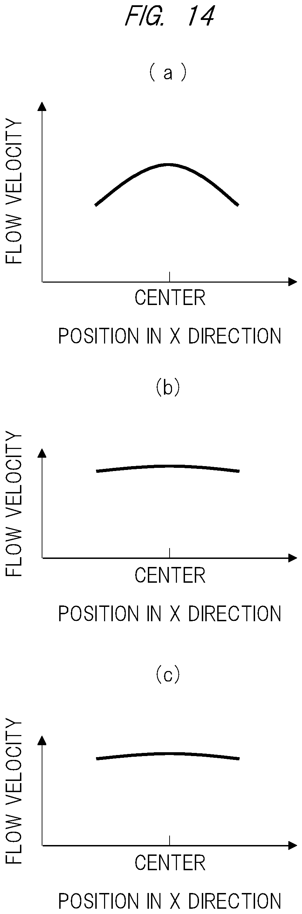

FIG. 14 is a graph showing the flow velocity distribution of the molten resin. Similar to (a) of FIG. 13, (a) of FIG. 14 shows a flow velocity distribution of the molten resin flowing through the slit portion 33 at the position of line B1-B1 in FIG. 7. Further, similarly to (a) of FIG. 13, (b) of FIG. 14 shows a flow velocity distribution of the molten resin flowing through the slit portion 33 at the position of line B3-B3 of FIG. 7. Furthermore, similarly to (c) of FIG. 13, (c) of FIG. 14 shows a flow velocity distribution of the molten resin immediately after being discharged from the plurality of hole portions 21. FIG. 14 corresponds to the flow velocity distribution when the viscosity of the molten resin is higher than that in the case of FIG. 13.

Also in both of a case where the viscosity of the molten resin is low ((a) of FIG. 13) and a case where the viscosity of the molten resin is high ((a) in FIG. 14), the flow viscosity distribution when the molten resin flows from the resin introduction portion 32 into the slit portion 33 may have such a distribution as to become large at the center of the slit portion 33 in the width direction (X direction) and to gradually decrease from the center of the slit portion 33 in the width direction (X direction) toward the both ends. However, the non-uniformity of the flow velocity distribution when the molten resin flows from the resin introduction portion 32 to the slit portion 33 has a tendency to become larger in the high viscosity of the molten resin ((a) of FIG. 14) than in the low viscosity of the molten resin ((a) of FIG. 13). That is, a difference between the flow velocity at the central portion of the slit portion 33 in the width direction (X direction) and the flow velocity at the both end portions of the slit portion 33 in the width direction (X direction) is larger when the viscosity of the molten resin is high ((a) of FIG. 14) than when the viscosity of the molten resin is low ((a) of FIG. 13). This is because a difference in flow velocity due to a difference in flow path resistance is larger when the viscosity of the molten resin is high than when the viscosity of the molten resin is low.

In the case of FIG. 13 (when the viscosity of the molten resin is low), the height position of the plate member 11 is set as shown in FIG. 9. By doing so, after the molten resin has passed below the protruding portion of the plate member 11, the flow velocity of the molten resin can be made substantially uniform regardless of the position in the X direction. However, in the case of FIG. 14 (when the viscosity of the molten resin is high), if the height position of the plate member 11 is set as shown in FIG. 9 and even if the protruding portion of the plate member 11 is present, the non-uniformity of the flow velocity distribution of the molten resin may not be sufficiently alleviated and may remain to some extent even after the molten resin has passed below the protruding portion of the plate member 11.

In contrast thereto, in the present embodiment, the plate member 11 is movable in the up-and-down direction (Z direction). Consequently, in the case of FIG. 14 (when the viscosity of the molten resin is high), the height position of the plate member 11 is lowered as compared with the case of FIG. 13 (when the viscosity of the molten resin is low). That is, in the case of FIG. 13 (when the viscosity of the molten resin is low), the height position of the plate member 11 is set as shown in FIG. 9, whereas in the case of FIG. 14 (when the viscosity of the molten resin is high), the height position of the plate member 11 is set as shown in FIG. 11. The height position of the plate member 11 is lower in the case of FIG. 11 (when the viscosity of the molten resin is high) than in the case of FIG. 9 (when the viscosity of the molten resin is low) and, therefore, the protrusion amount t1 of the plate member 11 becomes large.

Although the height position of the plate member 11 in the case of FIG. 9 is different from that of FIG. 11, the plate member 11 itself is the same. Consequently, also in both the case of FIG. 9 and the case of FIG. 11, the protrusion amount t1 of the plate member 11 becomes large at the center of the slit portion 33 in the width direction (X direction), and gradually becomes smaller from the center of the slit portion 33 in the width direction (X direction) toward the both ends. Therefore, in both the case of FIG. 9 and the case of FIG. 11, an effective thickness t2 of the slit portion 33 below the protruding portion of the plate member 11 becomes smaller at the center of the slit portion 33 in the width direction (the X direction) and gradually becomes larger from the center of the slit potion 33 in the width direction (the X direction) toward the both ends.

However, the case of FIG. 11 is lower in the height position of the plate member 11 than the case of FIG. 9, so that to reflect such a situation, the protrusion amount t1 of the plate member 11 is larger in the case of FIG. 11 than in the case of FIG. 9. By reflecting this, the effective thickness t2 of the slit portion 33 below the protruding portion of the plate member 11 becomes smaller in the case of FIG. 11 than in the case of FIG. 9.

Here, it is assumed that in the case of FIG. 9, the effective thickness t2 at the center of the slit portion 33 in the width direction (X direction) is referred to as a thickness t2a, and the effective thickness t2 at the both end portions of the slit portions 33 in the width direction (X direction) is referred to as a thickness t2b. Further, it is assumed that in the case of FIG. 11, the effective thickness t2 at the center of the slit portion 33 in the width direction (X direction) is referred to as a thickness t2c, and the effective thickness at the both end portions of the slit portions 33 in the width direction (X direction) is referred to as a thickness t2d.

A difference (t2d - t2c) between the thickness t2c at the center and the thickness t2d at the both end portions in the case of FIG. 11 is the same as a difference (t2b - t2a) between the thickness t2a at the center and the thickness t2b at the both end portions in the case of FIG. 9. That is, t2b - t2a = t2d - t2c is met. However, a ratio (t2d / t2c) of the thickness t2d at the both end portions to the thickness t2c at the center in the case of FIG. 11 becomes larger than a ratio (t2b / t2a) of the thickness t2b at the both end portions to the thickness t2a at the center in the case of FIG. 9. That is, t2b / t2a < t2d / t2c is met. Consequently, the protruding portion of the plate member 11 acts to suppress the flow (flow velocity) of the molten resin in the slit portion 33, but a difference between flow velocity suppressing action at the center in the width direction (X direction) and flow velocity suppressing action on the both end portion sides in the width direction (the X direction) becomes larger in the case of FIG. 11 than in the case of FIG. 9. The difference between the flow velocity suppressing action at the center in the width direction (X direction) and the flow velocity suppressing action at the both end portion sides in the width direction (X direction) has a tendency to become larger as the ratio (t2b / t2a or t2d / t2c) of the effective thickness t2 on the both end portions in the width direction (X direction) to the effective thickness t2 at the center in the width direction (X direction) becomes larger.

Thus, when the viscosity of the molten resin is high, as shown in FIG. 11, the height position of the plate member 11 is lowered to increase the protrusion amount t1 of the plate member 11, which brings an increase in a value of t2d / t2c to increase the difference between the flow velocity suppressing action at the center in the width direction (X direction) and the flow velocity suppressing action on the both end portion sides in the width direction (X direction). Consequently, even when the viscosity of the molten resin is high, the flow velocity distribution of the molten resin after the molten resin has passed below the protruding portion of the plate member 11 becomes the distribution as shown in (b) of FIG. 14 and becomes almost uniform regardless of the position in the X direction. Thus, the flow velocity when the molten resin flows from the slit portion 33 into the plurality of hole portions 21 can be made substantially uniform regardless of the position in the X direction. Therefore, the respective flow velocities of the molten resin discharged from the plurality of hole portions 21 can be made substantially the same. For this reason, as shown in (c) of FIG. 14, the flow velocity distribution of the molten resin (strand 8) discharged from the plurality of hole portions 21 can be made uniform. Specifically, in the plurality of hole portions 21 arranged in the X direction, the respective flow velocities of the molten resin discharged from the respective hole portions 21 can be made substantially the same, too.

In this way, since the present embodiment is configured to be capable of moving the plate member 11 in the up-and-down direction (Z direction), the height position of the plate member 11 can be adjusted according to characteristics (specifically, viscosity) of the molten resin supplied from the cylinder 2 to the resin flow path portion 22 and, thereby, the protrusion amount t1 of the plate member 11 can be changed (controlled). Consequently, the above change (control) can be handled by changing the height position of the plate member 11 even if the viscosity of the molten resin supplied from the cylinder 2 to the resin flow path portion 22 of the die 5 is changed by changing the type and ratio of the resin material and the filler to be kneaded in the cylinder 2 of the extruder 1 or by changing the conditions or the like for kneading the resin in the cylinder 2. This makes it possible to make the flow velocity distribution of the molten resin (strand 8) discharged from the plurality of hole portions 21 of the die 5 uniform even if the characteristics (viscosity) of the molten resin change. That is, in the plurality of hole portions 21 of the die 5, the respective flow velocities of the molten resin discharged from the respective hole portions 21 can be made substantially the same, too. Thus, even if the characteristics (viscosity) of the molten resin change, the resin product (here, pellet 9) can be accurately manufactured by using the resin extruded from the die 5 and the quality of the manufactured resin product can be improved. In addition, the dimensional uniformity of the manufactured pellets 9 can be improved. Furthermore, the present embodiment makes it easier to manage the manufacturing process.

Next, a case where plate members (211, 311, 411) of study examples that have been examined by the present inventor is used instead of the plate member 11 of the present embodiment will be described below.

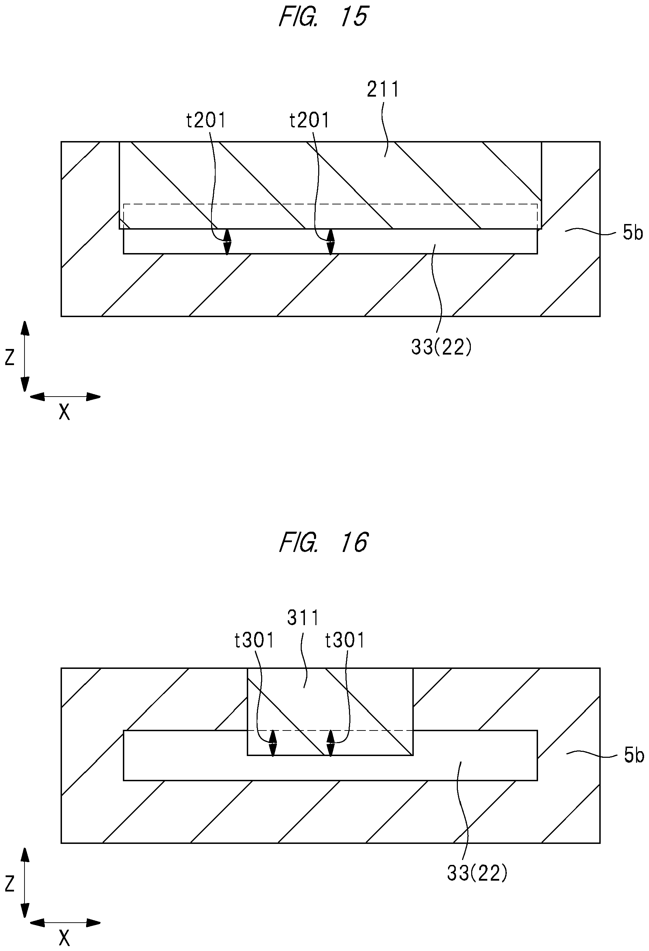

FIG. 15 is a sectional view of a die showing a case where a plate member 211 of a second study example that has been examined by the present inventor is used instead of the plate member 11 of the present embodiment, is a sectional view of a die, and shows a cross-section corresponding to that of FIG. 9 mentioned above.

In a case of FIG. 15, a protrusion amount t201 of the plate member 211 with respect to the slit portion 33 is uniform in the width direction (X direction) of the slit portion 33. Consequently, an effective thickness of the slit portion 33 is constant below a protruding portion of the plate member 211 regardless of positions in the X direction. For this reason, in the case of FIG. 15, even if the plate member 211 protrudes toward the slit portion 33, the action of making the flow velocity distribution of the molten resin uniform cannot be obtained.

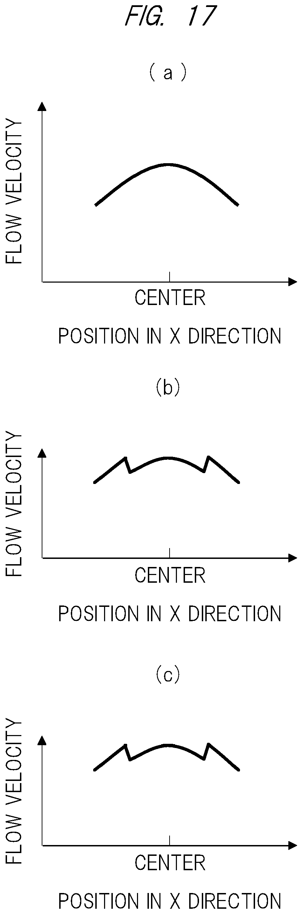

FIG. 16 is a sectional view of a die showing a case of using a plate member 311 of a third study example examined by the present inventor instead of the plate member 11 of the present embodiment, and shows a cross-section corresponding to that of FIG. 9 mentioned above. FIG. 17 is a graph showing a flow velocity distribution of a molten resin when the plate member 311 of the third study example is used. Similar to (a) of FIG. 13, (a) of FIG. 17 shows a flow velocity distribution of the molten resin flowing through the slit portion 33 at the position of line B1-B1 in FIG. 7 mentioned above. Further, similarly to (b) of FIG. 13, (b) of FIG. 17 shows a flow velocity distribution of the molten resin flowing through the slit portion 33 at the position of line B3-B3 in FIG. 7 mentioned above. Furthermore, similarly to (c) of FIG. 13, (c) of FIG. 17 shows a flow velocity distribution of the molten resin immediately after being discharged from the plurality of hole portions 21.

In a case of FIG. 16, a protrusion amount t301 of the plate member 311 with respect to the slit portion 33 is uniform in the width direction (X direction) of the slit portion 33. Consequently, an effective thickness of the slit portion 33 below a protruding portion of the plate member 311 becomes constant regardless of the position in the X direction. Thus, below the protruding portion of the plate member 311, flow velocity resistance becomes constant regardless of the position in the X direction, so that even if the molten resin passes below the protruding portion of the plate member 311, as shown in (b) of FIG. 17, the flow velocity distribution is not uniformized and the non-uniformity of the flow velocity distribution leads to remaining.

Further, a width (dimension in the X direction) of the plate member 311 of the third study example is smaller than the width (dimension in the X direction) of the slit portion 33. Consequently, the plate member 311 protrudes not toward the entire width of the slit portion 33 but toward only a part of the width of the slit portion. Since the action of suppressing the flow of the molten resin by the plate member 311 occurs only in a region where the protruding portion of the plate member 311 exists, the flow velocity distribution of the molten resin on the downstream side of the plate member 311 becomes, as shown in (b) of FIG. 17, a distribution that has steps at positions corresponding to both end portions (both end portions in the X direction) of the plate member 311. Thus, when the plate member 311 is used, the flow velocity distribution of the molten resin discharged from the plurality of hole portions 21 may also become non-uniform as shown in (c) of FIG. 17.

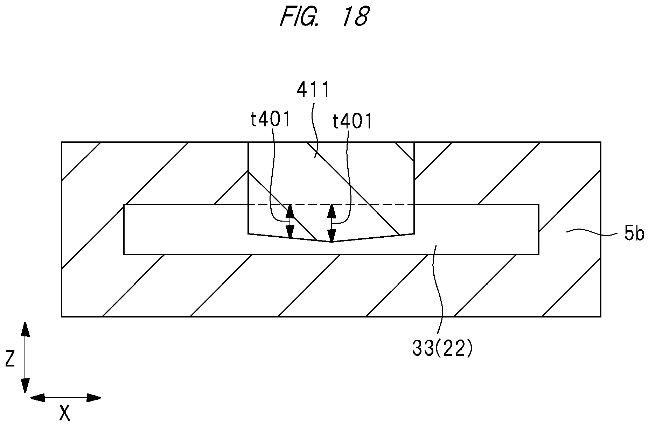

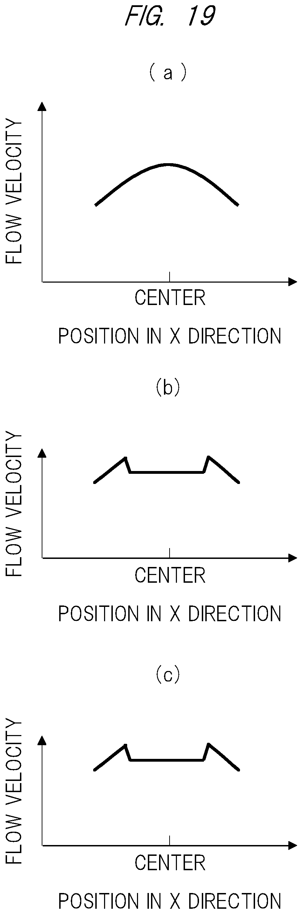

FIG. 18 is a sectional view of a die showing a case where a plate member 411 of a fourth study example examined by the present inventor is used instead of the plate member 11 of the present embodiment, and shows a cross-section corresponding to that of FIG. 9 mentioned above. FIG. 19 is a graph showing a flow velocity distribution of the molten resin where the plate member 411 of the fourth study example is used. Similar to (a) of FIG. 13, (a) of FIG. 19 shows a flow velocity distribution of the molten resin flowing through the slit portion 33 at the position of line B1-B1 in FIG. 7 mentioned above. Furthermore, similarly to (b) of FIG. 13, (b) of FIG. 19 shows a flow velocity distribution of the molten resin flowing through the slit portion 33 at the position of line B3-B3 in FIG. 7 mentioned above. Moreover, similarly to (C) of FIG. 13, (c) of FIG. 19 shows a flow velocity distribution of the molten resin immediately after being discharged from the plurality of hole portions 21.

In a case of FIG. 18, a protrusion amount t401 of the plate member 411 with respect to the slit portion 33 increases at a center in the width direction (X direction), and gradually decreases from the center toward both ends in the width direction (X direction). Consequently, when the molten result passes below a protruding portion of the plate member 411, a flow velocity distribution of the molten resin on a downstream side of the plate member 411 acts to be uniformized.

However, a width (dimension in the X direction) of the plate member 411 of the fourth study example is smaller than the width (dimension in the X direction) of the slit portion 33, and the plate member 411 protrudes not toward the entire width of the slit portion 33 but toward only a part of the width of the slit portion. Since the action of suppressing the flow of the molten resin by the plate member 311 occurs only in the region where the protruding portion of the plate member 311 exists, the flow velocity distribution of the molten resin on the downstream side of the plate member 411 becomes, as shown in (b) of FIG. 19, a distribution that has steps at positions corresponding to both end portions (both end portions in the X direction) of the plate member 411. Thus, when the plate member 411 is used, the flow velocity distribution of the molten resin discharged from the plurality of hole portions 21 may also become non-uniform as shown in (c) of FIG. 19.

Therefore, it can be seen that two matters are important in order to make the flow velocity distribution of the molten resin on the downstream side of the plate member uniform. That is, the first matter is that, like the plate member 11 of the present embodiment, the protrusion amount t1 of the plate member 11 becomes large at the center in the width direction (X direction) and gradually becomes smaller from the center toward the both ends. The second matter is that the plate member 11 protrudes toward the entire width of the resin flow path portion 22 (more specifically, the slit portion 33) in the middle of the resin flow path portion 22 (more specifically, the slit portion 33). Using the plate member 11 of the present embodiment that satisfies these two matters makes it possible to make the flow velocity distribution of the molten resin on the downstream side of the plate member 11 uniform. By allowing the plate member 11 to move in the up-and-down direction, the height position of the plate member 11 is adjustable according to the characteristics (viscosity) of the molten resin, so that even if the characteristics (viscosity) of the molten resin have changed, the flow velocity distribution of the molten resin discharged from the plurality of hole portions 21 of the die 5 can be made uniform.

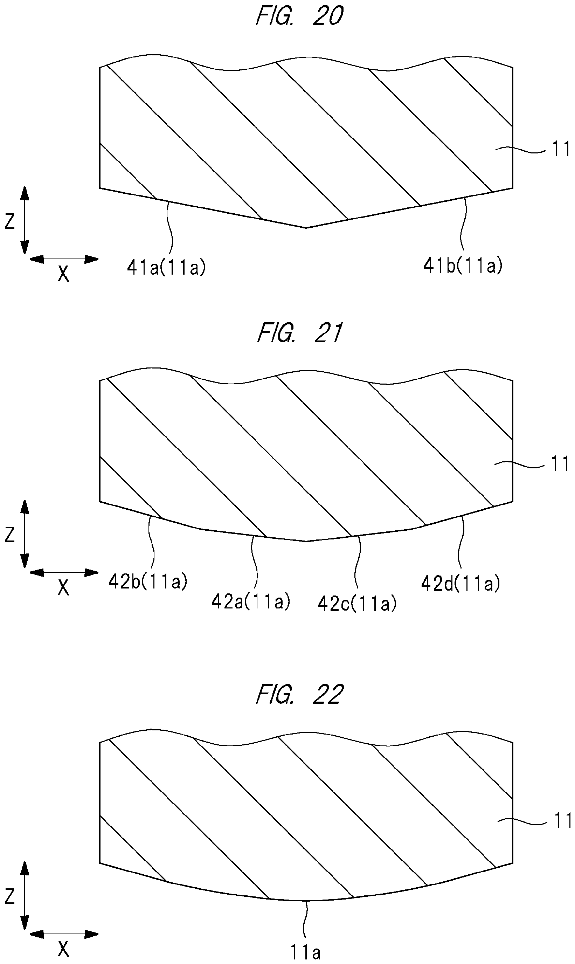

FIG. 20 is a sectional view of a main part of the plate member 11 used in the present embodiment, FIG. 21 is a sectional view of a main part showing a first modification example of the plate member 11, and FIG. 22 is a sectional view of a main part showing a second modification example of the plate member 11. FIGS. 20 to 22 each show a sectional view of a tip portion of the plate member 11, which corresponds to a cross-section substantially perpendicular to a thickness direction (Y direction) of the plate member 11. The tip portion of the plate member 11 each shown in FIGS. 20 to 22 projects toward the resin flow path portion 22 (more specifically, the slit portion 33).

The plate member 11 projects toward the slit portion 33 so that a tip surface 11a of the plate member 11 becomes lower than an upper surface 33a of the slit portion 33. The tip surface 11a of the plate member 11 has a shape in which a height position is low at the center in the width direction (X direction) and the height position is gradually increased from the center toward the both ends in the width direction (X direction). This is common to a case of FIG. 20, a case of FIG. 21, and a case of FIG. 22. Since the plate member 11 has such a shape, as described above, the protrusion amount t1 of the plate member 11 can be accurately realized so as to becomes large at the center in the width direction (X direction) and gradually decrease from the center toward the both ends in the width direction (X direction).

In the case of FIG. 20, in a sectional view substantially perpendicular to the thickness direction (Y direction) of the plate member 11, the tip surface 11a of the plate member 11 is configured by: a side (line) 41a that connects the center in the width direction (X direction) and one of the both ends in the width direction (X direction); and a side (line) 41b that connects the center in the width direction (X direction) and the other of the both ends in the width direction (X direction). That is, the tip surface 11a is composed of two surfaces of a surface parallel to the side 41a and a surface parallel to the side 41b. An angle formed by the side 41a and the side 41b is an obtuse angle.

In the case of FIG. 21, in a sectional view substantially perpendicular to the thickness direction (Y direction) of the plate member 11, the tip surface 11a of the plate member 11 is configured from: two sides (lines) 42a, 42b that connect the center in the width direction (X direction) and one of the both ends in the width direction (X direction); and two sides (lines) 42c, 42d that connect the center in the width direction (X direction) and the other of the both ends in the width direction (X direction). That is, the tip surface 11a is composed of four surfaces of a surface parallel to the side 42a, a surface parallel to the side 42b, a surface parallel to the side 42c, and a surface parallel to the side 42d. An angle formed by the side 42a and the side 42b is an obtuse angle, an angle formed by the side 42a and the side 42c is an obtuse angle, and an angle formed by the side 42c and the side 42d is an obtuse angle. The tip surface 11a can also be configured by more surfaces.

In the case of FIG. 22, in a sectional view substantially perpendicular to the thickness direction (Y direction) of the plate member 11, the tip surface 11a of the plate member 11 is formed by a curved line having no corner. That is, the tip surface 11a is formed by a curved surface having no corner.

In any of FIGS. 20 to 22, when the tip portion of the plate member 11 is caused to protrude toward the resin flow path portion 22 (more specifically, the slit portion 33), the protrusion amount t1 of the plate member 11 becomes large at the center in the width direction (X direction) and gradually decreases from the center toward the both ends in the width direction (X direction). Therefore, as described above, the action of making the flow velocity distribution of the molten resin uniform can be obtained.

### EXPLANATION OF REFERENCE NUMERALS

1 Extruder;
2 Cylinder;
3 Rotary drive mechanism;
4 Hopper;
5 Die;
5a, 5b Die member;
6 Cooling tank;
7 Cutting device;
8 Strand;
9 Pellet;
10 Pellet manufacturing system;
11 Plate member (moving plate);
11a Tip surface;
12 Groove portion;
13 Fixed portion;
14 Slide bar;
15 Support member;
21 Hole portion (die hole portion);
22 Resin flow path portion;
31, 131 Inflow port;
32, 132 Resin introduction portion;
33, 133 Slit portion;
33a Upper surface;
41a, 41b, 42a, 42b, 42c, 42d Side;
121 Hole portion; and
211, 311, 411 Plate member.

## Claims

1. An extrusion die (5) comprising:
an opening (31) for supplying a molten resin;
a plurality of die hole portions (21) for discharging a strand made of the molten resin;
a resin flow path portion (22) extending in a flow path direction (Y) that leads to the plurality of die hole portions (21) from the opening (31),
wherein the resin flow path portion (22) has a resin introduction portion (32) connecting
with the opening (31), and a slit portion (33) located on a downstream side of the resin introduction portion (32); and
a moving plate (11) movable in an up-and-down direction (Z) so as to protrude toward the resin flow path portion (22),
wherein the moving plate (11) is arranged along a first direction (X) orthogonal to each of the flow path direction (Y) and the up-and-down direction (Z),
both end portions of the moving plate (11) in the first direction (X) in an up-and-down direction (Z) so as to contact with an inner wall of the resin flow path portion (22), and
a protrusion amount (t1) of the moving plate (11) with respect to the resin flow path portion (22) decreases from a central portion in the first direction (X) toward the both end portions, and
the plurality of die hole portions (21) are coupled to a downstream-side end portion of the slit portion (33),
the first direction (X) is a width direction of the slit portion (33), and
the moving plate (11) is protruding toward the entire width of the slit portion (33) in a middle of the slit portion (33),
a width - (X) of the resin introduction portion (32) gradually increases from an upstream side toward a downstream side,
**characterized in that**
a width (X) of the slit portion (33) is larger than a width (X) of the opening (31), **in that** the moving plate (11) is protruding toward the slit portion (33) so that a tip surface (11a) of the moving plate (11) becomes lower than an upper surface (33a) of the slit portion (33), and
**in that** the tip surface (11a) of the moving plate (11) has a shape in which a height position gradually increases from a center point toward both ends in the first direction (X).

2. The extrusion die (5) according to claim 1,
wherein the plurality of die hole portions (21) coupled to the slit portion (33) are arranged in the first direction (X direction).

3. The extrusion die (5) according to claim 1,
wherein a protrusion amount (t1) of the moving plate (11) with respect to the resin flow path portion (22) is changeable by adjusting a height position of the moving plate (11).

4. The extrusion die (5) according to claim 1,
wherein a height position of the moving plate (11) is adjustable according to viscosity of the molten resin.

5. The extrusion die (5) according to claim 1,
the extrusion die (5) is used by being attached to a cylinder (2) of an extruder (1).

6. The extrusion die (5) according to claim 2,
wherein a length (L1) of each of the plurality of die hole portions (21) is larger than a thickness (t3) of the slit portion (33).

7. An Extruder (1) comprising:
a cylinder (2); and
a die (5) attached to the cylinder (2),
wherein the die (5) has:
an opening (31) for supplying a molten resin from the cylinder (2);
a plurality of die hole portions (21) for discharging a strand made of the molten resin;
a resin flow path portion (22) extending in a flow path direction (Y) that leads to the plurality of die hole portions (21) from the opening (31); and
wherein the resin flow path portion (22) has a resin introduction portion (32) connecting with the opening (31), and a slit portion (33) located on a downstream side of the resin introduction portion (32),
a moving plate (11) movable in an up-and-down direction (Z) so as to protrude toward the resin flow path portion (22),
the moving plate (11) is arranged along a first direction (X) orthogonal to each of the flow path direction (Y) and the up-and-down direction (Z),
both end portions of the moving plate (11) in the first direction (X) are moveable in an up-and-down direction (Z) so as to contact with an inner wall of the resin flow path portion (22), and
a protrusion amount (t1) of the moving plate (11) with respect to the resin flow path portion (22) become small from a central portion in the first direction (X) toward the both end portions, and
the first direction (X) is a width direction of the slit portion (33),
the moving plate (11) is protruding over the entire width of the slit portion (33) in a middle of the slit portion (33),
a width (X) of the resin introduction portion (32) gradually increases from an upstream side toward a downstream side,
**characterized in that** a width (X) of the slit portion (33) is larger than a width (X) of the opening (31),
**in that** the moving plate (11) is protruding toward the slit portion (33) so that a tip surface (11a) of the moving plate (11) is lower than an upper surface (33a) of the slit portion (33), and
**in that** the tip surface (11a) of the moving plate (11) has a shape in which a height position gradually increases from a center point in the first direction (X) toward both ends.

8. The extruder (1) according to claim 7,
wherein the plurality of die hole portions (21) coupled to the slit portion (33) are arranged in the first direction (X).

9. The extruder (1) according to claim 7,
wherein a protrusion amount (t1) of the moving plate (11) with respect to the resin flow path portion (22) is changeable by adjusting a height position of the moving plate (11).

10. The extruder (1) according to claim 7,
wherein a height position of the moving plate (11) is adjustable according to viscosity of the molten resin.

## Patentansprüche

1. Extrusionsdüse (5), umfassend:
eine Öffnung (31) zum Zuführen eines geschmolzenen Harzes;
eine Vielzahl von Düsenöffnungsabschnitten (21) zum Ausstoßen eines aus dem geschmolzenen Harz hergestellten Strangs;
einen Harzfließwegabschnitt (22), der sich in einer Fließwegrichtung (Y) erstreckt, die von der Öffnung (31) zu der Vielzahl von Düsenöffnungsabschnitten (21) führt,
wobei der Harzfließwegabschnitt (22) einen Harzeinführungsabschnitt (32), der mit der Öffnung (31) verbunden ist, und einen Schlitzabschnitt (33) aufweist, der an einer stromabwärtigen Seite des Harzeinführungsabschnitts (32) angeordnet ist; und
eine bewegbare Platte (11), die in einer Auf- und Abwärtsrichtung (Z) bewegbar ist, sodass diese in Richtung des Harzfließwegabschnitts (22) vorragt,
wobei die bewegbare Platte (11) entlang einer ersten Richtung (X) orthogonal zur Fließwegrichtung (Y) sowie der Auf- und Abwärtsrichtung (Z) angeordnet ist,
beide Endabschnitte der bewegbaren Platte (11) in der ersten Richtung (X) in einer Auf- und Abwärtsrichtung (Z) so angeordnet sind, dass diese eine Innenwand des Harzfließwegabschnitts (22) berühren, und
ein Vorsprungbetrag (t1) der bewegbaren Platte (11) in Bezug auf den Harzfließwegabschnitt (22) von einem Mittelabschnitt in der ersten Richtung (X) in Richtung der beiden Endabschnitte abnimmt, und
die Vielzahl von Düsenöffnungsabschnitten (21) mit einem stromabwärtigen Endabschnitt des Schlitzabschnitts (33) verbunden ist,
die erste Richtung (X) eine Breitenrichtung des Schlitzabschnitts (33) ist, und
die bewegbare Platte (11) in einer Mitte des Schlitzabschnitts (33) in Richtung der gesamten Breite des Schlitzabschnitts (33) vorragt,
eine Breite (X) des Harzeinführungsabschnitts (32) von einer stromaufwärtigen Seite in Richtung einer stromabwärtigen Seite schrittweise zunimmt, **dadurch gekennzeichnet, dass**
eine Breite (X) des Schlitzabschnitts (33) größer als eine Breite (X) der Öffnung (31) ist,
dass die bewegbare Platte (11) in Richtung des Schlitzabschnitts (33) so vorragt, dass eine Spitzenfläche (11a) der bewegbaren Platte (11) niedriger als eine obere Fläche (33a) des Schlitzabschnitts (33) wird, und
dass die Spitzenfläche (11a) der bewegbaren Platte (11) eine Form aufweist, bei der eine Höhenposition von einem Mittelpunkt in Richtung der beiden Enden in der ersten Richtung (X) schrittweise zunimmt.

2. Extrusionsdüse (5) nach Anspruch 1,
wobei die Vielzahl von Düsenöffnungsabschnitten (21), die mit dem Schlitzabschnitt (33) verbunden sind, in der ersten Richtung (X-Richtung) angeordnet sind.

3. Extrusionsdüse (5) nach Anspruch 1,
wobei ein Vorsprungbetrag (t1) der bewegbaren Platte (11) in Bezug auf den Harzfließwegabschnitt (22) durch Einstellen einer Höhenposition der bewegbaren Platte (11) veränderbar ist.

4. Extrusionsdüse (5) nach Anspruch 1,
wobei eine Höhenposition der bewegbaren Platte (11) gemäß der Viskosität des geschmolzenen Harzes einstellbar ist.

5. Extrusionsdüse (5) nach Anspruch 1,
wobei die Extrusionsdüse (5) an einem Zylinder (2) eines Extruders (1) befestigt ist.

6. Extrusionsdüse (5) nach Anspruch 2, wobei eine Länge (L1) eines jeden der Vielzahl von Düsenöffnungsabschnitten (21) größer als eine Dicke (t3) des Schlitzabschnitts (33) ist.

7. Extruder (1) umfassend:
einen Zylinder (2); und
eine Düse (5), die am Zylinder (2) befestigt ist,
wobei die Düse (5) aufweist:
eine Öffnung (31) zum Zuführen eines geschmolzenen Harzes aus dem Zylinder (2)
eine Vielzahl von Düsenöffnungsabschnitten (21) zum Ausstoßen eines aus dem geschmolzenen Harz hergestellten Strangs;
einen Harzfließwegabschnitt (22), der sich in einer Fließwegrichtung (Y) erstreckt, die von der Öffnung (31) zu der Vielzahl von Düsenöffnungsabschnitten (21) führt; und
wobei der Harzfließwegabschnitt (22) einen Harzeinführungsabschnitt (32), der mit der Öffnung (31) verbunden ist, und einen Schlitzabschnitt (33) aufweist, der auf einer stromabwärtigen Seite des Harzeinführungsabschnitts (32) angeordnet ist,
eine bewegbare Platte (11), die in einer Auf- und Abwärtsrichtung (Z) bewegbar ist, sodass diese in Richtung des Harzfließwegabschnitts (22) vorragt,
die bewegbare Platte (11) entlang einer ersten Richtung (X) orthogonal zur Fließwegrichtung (Y) sowie der Auf- und Abwärtsrichtung (Z) angeordnet ist,
beide Endabschnitte der bewegbaren Platte (11) in der ersten Richtung (X) in einer Auf- und Abwärtsrichtung (Z) bewegbar sind, um eine Innenwand des Harzfließwegabschnitts (22) zu berühren, und
ein Vorsprungbetrag (t1) der bewegbaren Platte (11) in Bezug auf den Harzfließwegabschnitt (22) von einem Mittelabschnitt in der ersten Richtung (X) in Richtung der beiden Endabschnitten abnimmt, und
die erste Richtung (X) eine Breitenrichtung des Schlitzabschnitts (33) ist, und
die bewegbare Platte (11) über die gesamte Breite des Schlitzabschnitts (33) in einer Mitte des Schlitzabschnitts (33) vorragt,
eine Breite (X) des Harzeinführungsabschnitts (32) von einer stromaufwärtigen Seite zu einer stromabwärtigen Seite schrittweise zunimmt, **dadurch gekennzeichnet, dass**
eine Breite (X) des Schlitzabschnitts (33) größer als eine Breite (X) der Öffnung (31) ist,
dass die bewegbare Platte (11) in Richtung des Schlitzabschnitts (33) so vorragt, dass eine Spitzenfläche (11a) der bewegbaren Platte (11) niedriger als eine obere Fläche (33a) des Schlitzabschnitts (33) ist, und
dass die Spitzenfläche (11a) der bewegbaren Platte (11) eine Form aufweist, bei der eine Höhenposition von einem Mittelpunkt in der ersten Richtung (X) in Richtung beider Enden schrittweise zunimmt.

8. Extruder (1) nach Anspruch 7,
wobei die Vielzahl von Düsenöffnungsabschnitten (21), die mit dem Schlitzabschnitt (33) verbunden sind, in der ersten Richtung (X) angeordnet sind.

9. Extruder (1) nach Anspruch 7,
wobei ein Vorsprungbetrag (t1) der bewegbaren Platte (11) in Bezug auf den Harzfließwegabschnitt (22) durch Einstellen einer Höhenposition der bewegbaren Platte (11) veränderbar ist.

10. Extruder (1) nach Anspruch 7,
wobei eine Höhenposition der bewegbaren Platte (11) gemäß der Viskosität des geschmolzenen Harzes einstellbar ist.

## Revendications

1. Matrice d'extrusion (5) comprenant :
une ouverture (31) destinée à fournir une résine fondue ;
une pluralité de parties d'orifices de matrice (21) destinées à évacuer une lanière composée de la résine fondue ;
une partie de trajet d'écoulement de résine (22) qui s'étend dans une direction de trajet d'écoulement (Y) qui mène à la pluralité de parties d'orifices de matrice (21) depuis l'ouverture (31),
dans laquelle la partie de trajet d'écoulement de résine (22) possède une partie d'introduction de résine (32) reliée à l'ouverture (31), et une partie de fente (33) située sur un côté aval de la partie d'introduction de résine (32) ; et
une plaque mobile (11) dans une direction ascendante et descendante (Z) de façon à faire saillie vers la partie de trajet d'écoulement de résine (22),
dans laquelle la plaque mobile (11) est prévue le long d'une première direction (X) orthogonale par rapport à chacune de la direction de trajet d'écoulement (Y) et de la direction ascendante et descendante (Z),
les deux parties d'extrémité de la plaque mobile (11) dans la première direction (X) sont mobiles dans une direction ascendante et descendante (Z) de façon à entrer en contact avec une paroi interne de la partie de trajet d'écoulement de résine (22), et
une quantité de saillie (t1) de la plaque mobile (11) par rapport à la partie de trajet d'écoulement de résine (22) diminue depuis une partie centrale dans la première direction (X) vers les deux parties d'extrémité, et
la pluralité de parties d'orifices de matrice (21) est couplée à une partie d'extrémité côté aval de la partie de fente (33),
la première direction (X) est une direction de largeur de la partie de fente (33), et
la plaque mobile (11) fait saillie vers la largeur entière de la partie de fente (33) dans un milieu de la partie de fente (33),
une largeur (X) de la partie d'introduction de résine (32) augmente progressivement entre un côté amont et un côté aval,
**caractérisée en ce que**
une largeur (X) de la partie de fente (33) est supérieure à une largeur (X) de l'ouverture (31),
**en ce que** la plaque mobile (11) fait saillie vers la partie de fente (33) de sorte qu'une surface d'extrémité (11a) de la plaque mobile (11) devienne plus basse qu'une surface supérieure (33a) de la partie de fente (33), et
**en ce que** la surface d'extrémité (11a) de la plaque mobile (11) présente une forme selon laquelle une position en hauteur augmente progressivement d'un point central vers les deux extrémités dans la première direction (X).

2. Matrice d'extrusion (5) selon la revendication 1,
dans laquelle la pluralité de parties d'orifices de matrice (21) couplées à la partie de fente (33) est prévue dans la première direction (direction X).

3. Matrice d'extrusion (5) selon la revendication 1,
dans laquelle une quantité de saillie (t1) de la plaque mobile (11) par rapport à la partie de trajet d'écoulement de résine (22) est modifiable en ajustant une position en hauteur de la plaque mobile (11).

4. Matrice d'extrusion (5) selon la revendication 1,
dans laquelle une position en hauteur de la plaque mobile (11) est ajustable selon la viscosité de la résine fondue.

5. Matrice d'extrusion (5) selon la revendication 1,
la matrice d'extrusion (5) est utilisée en étant fixée sur un cylindre (2) d'une extrudeuse (1).

6. Matrice d'extrusion (5) selon la revendication 2,
dans laquelle une longueur (L1) de chacune de la pluralité de parties d'orifices de matrice (21) est supérieure à une épaisseur (t3) de la partie de fente (33).

7. Extrudeuse (1) comprenant :
un cylindre (2) ; et
une matrice (5) fixée sur le cylindre (2),
dans laquelle la matrice (5) possède :
une ouverture (31) destinée à fournir une résine fondue depuis le cylindre (2) ;
une pluralité de parties d'orifices de matrice (21) destinées à évacuer une lanière composée de la résine fondue ;
une partie de trajet d'écoulement de résine (22) qui s'étend dans une direction de trajet d'écoulement (Y) qui mène à la pluralité de parties d'orifices de matrice (21) depuis l'ouverture (31) ; et
dans laquelle la partie de trajet d'écoulement de résine (22) possède une partie d'introduction de résine (32) reliée à l'ouverture (31), et une partie de fente (33) située sur un côté aval de la partie d'introduction de résine (32),
une plaque mobile (11) dans une direction ascendante et descendante (Z) de façon à faire saillie vers la partie de trajet d'écoulement de résine (22),
la plaque mobile (11) est prévue le long d'une première direction (X) orthogonale par rapport à chacune de la direction de trajet d'écoulement (Y) et de la direction ascendante et descendante (Z),
les deux parties d'extrémité de la plaque mobile (11) dans la première direction (X) sont mobiles dans une direction ascendante et descendante (Z) de façon à entrer en contact avec une paroi interne de la partie de trajet d'écoulement de résine (22), et
une quantité de saillie (t1) de la plaque mobile (11) par rapport à la partie de trajet d'écoulement de résine (22) diminue depuis une partie centrale dans la première direction (X) vers les deux parties d'extrémité, et
la première direction (X) est une direction de largeur de la partie de fente (33),
la plaque mobile (11) fait saillie sur la largeur entière de la partie de fente (33) dans un milieu de la partie de fente (33),
une largeur (X) de la partie d'introduction de résine (32) augmente progressivement entre un côté amont et un côté aval,
**caractérisée en ce que**
une largeur (X) de la partie de fente (33) est supérieure à une largeur (X) de l'ouverture (31),
**en ce que** la plaque mobile (11) fait saillie vers la partie de fente (33) de sorte qu'une surface d'extrémité (11a) de la plaque mobile (11) devienne plus basse qu'une surface supérieure (33a) de la partie de fente (33), et
**en ce que** la surface d'extrémité (11a) de la plaque mobile (11) présente une forme selon laquelle une position en hauteur augmente progressivement d'un point central dans la première direction (X) vers les deux extrémités.

8. Extrudeuse (1) selon la revendication 7,
dans laquelle la pluralité de parties d'orifices de matrice (21) couplées à la partie de fente (33) est prévue dans la première direction (X).

9. Extrudeuse (1) selon la revendication 7,
dans laquelle une quantité de saillie (t1) de la plaque mobile (11) par rapport à la partie de trajet d'écoulement de résine (22) est modifiable en ajustant une position en hauteur de la plaque mobile (11).

10. Extrudeuse (1) selon la revendication 7,
dans laquelle une position en hauteur de la plaque mobile (11) est ajustable selon la viscosité de la résine fondue.
